# EUROPEAN PATENT SPECIFICATION

(11) **EP 2 362 689 B1**
(45) Date of publication and mention of the grant of the patent: **19.09.2012**
(21) Application number: 10154846.9
(22) Date of filing: 26.02.2010
(51) Int. Cl.: H04W 8/18

(54) **Storage of radio information on a removable memory**
Speicherung von Funkinformationen auf einem entfernbaren Speicher
Stockage d'informations radio sur une mémoire amovible

(43) Date of publication of application: 31.08.2011
(60) Divisional application: 12167827.0
(73) Proprietor: Research In Motion Limited, Waterloo, ON N2L 3W8 (CA)
(72) Inventor: Wirtanen, Jeffrey William, Kanata Ontario K2K 3K1 (CA); Islam, M., Khaledul, Kanata Ontario K2K 3K1 (CA)
(74) Representative: Reichl, Wolfgang

(56) References cited:
- US-A1- 2004 236 849
- US-A1- 2004 260 791

## Description

### Field

The disclosure relates to mobile devices with removable memories.

### Background

Many mobile devices operate using an IM (identity module) such as a SIM (subscriber identity module). During use, various parameters are stored on the mobile device. When the user removes their SIM and re-installs it in a different device, the various parameters stored on the mobile device are lost.

Document US 204/236849 A1 discloses a mobile station with a removable module containing a preferred roaming list that identifies permitted systems/networks that the mobile station can access.

Document US 2004/260791 A1 discloses a mobile station comprising a memory card on which access information is stored.

### Summary

A broad aspect of the disclosure provides a mobile station comprising: at least one antenna; an IM (identity module); at least one wireless radio; an RMDISRI (removable memory distinct from IM with stored radio information) receptacle; one or a combination of: a) hardware, b) firmware, and c) software stored in device memory in combination with one or more processors configured to run the software, is configured to determine if an RMDISRI is installed in said RMDISRI receptacle, and if it has been determined that there is an RMDISRI installed in said RMDISRI receptacle, make use of radio information stored on the RMDISRI. Many examples of radio information that might be employed in this manner are provided below.

In some embodiments, the mobile station further comprises an RMDISRI installed in said RMDISRI receptacle.

In some embodiments, for radio information of a particular type is stored both on the RMDISRI and the IM, the mobile station is configured to use the information stored on the RMDISRI.

In some embodiments, the mobile station further comprises a device memory distinct from the IM and the RMDISRI; wherein for radio information of a particular type that is stored both on the RMDISRI and the device memory, the mobile station is configured to use the information stored on the RMDISRI.

In some embodiments, the one or a combination of: a) hardware, b) firmware, and c) software stored in device memory in combination with one or more processors to run the software, is configured to update radio information by determining if an RMDISRI is installed in said RMDISRI receptacle, and it has been determined that there is an RMDISRI installed in said RMDISRI receptacle, store an update to the radio information stored on the RMDISRI.

A broad aspect of the disclosure provides a method in a mobile station, the method comprising: determining if an RMDISRI is installed in an RMDISRI receptacle; and if it has been determined there is an RMDISRI installed in said RMDISRI receptacle, making use of radio information stored on the RMDISRI.

In some embodiments, for radio information of a particular type that is stored both on the RMDISRI and a SIM, the mobile station uses the information stored on the RMDISRI.

In some embodiments, for radio information of a particular type that is stored both on the RMDISRI and a device memory, the mobile station uses the information stored on the RMDISRI.

In some embodiments, the method further comprises updating radio information by: determining if an RMDISRI is installed in said RMDISRI receptacle; upon determining there is an RMDISRI installed in said RMDISRI receptacle, storing an update to the radio information stored on the RMDISRI.

In some embodiments, the stored radio information comprises information identifying a last RAT (radio access technology) the mobile station de-attached. In some embodiments, the method further comprises using the information identifying a last RAT the mobile station de-attached by starting scanning for the last RAT first any time a scan is to be performed.

In some embodiments, the stored radio information comprises: some or all of EF-NETPAR (Elementary File - Network Parameters). In some embodiments, the method further comprises using the EF-NETPAR stored on the RMDISRI rather than an EF-NETPAR stored on the IM.

In some embodiments, the stored radio information comprises information identifying the last N UMTS (Universal Mobile Telecommunications System) frequencies used by the mobile station. In some embodiments, the method further comprises using the information identifying the last N UMTS frequencies used by the mobile station by when scanning for UMTS, scanning using the information.

In some embodiments, the stored radio information comprises information based on past experience stored in association with a serving cell of interest. In some embodiments, the method further comprises using the information based on past experience in association with a serving cell of interest by monitoring observable information to determine if it is consistent with the information based on past experience; if monitored observable information is consistent with the information based on past experience, initiating or modifying scanning for the serving cell of interest.

In some embodiments, the information based on past experience stored in association with a serving cell of interest comprises: an observable pattern of detectable cells at a particular location. In some embodiments, the serving cell of interest is one of: a femtocell; a WiFi hotspot.

In some embodiments, the stored radio information comprises information based on past experience en route to a serving cell of interest. In some embodiments, the method further comprises using information based on past experience en route to the serving cell of interest by: monitoring observable information to determine if it is consistent with the information based on past experience en route to the serving cell of interest; if monitored observable information is consistent with the information en route to the serving cell of interest, initiating or modifying scanning for the serving cell of interest. In some embodiments, the serving cell of interest is one of a femtocell; a WiFi hotspot.

In some embodiments, the stored radio information comprises information that is determined based on user preferences or past history that can be used to help reduce scanning time.

In some embodiments, the stored radio information comprises EFs (elementary files) related to CSGs (closed subscriber groups).

In some embodiments, the stored radio information comprises at least one of a white list of cells where registration was successful previously; a black list of cells where registration was unsuccessful previously; a white list of networks where registration was successful previously; a black list of networks where registration was unsuccessful previously. In some embodiments, the method further comprises scanning based on at least one of the white list of cells, black list of cells, white list of networks, and black list of networks.

In some embodiments, the stored radio information comprises information identifying a last N systems and frequencies successfully connected to. In some embodiments, the method further comprises using the information identifying the last N systems and frequencies successfully connected to by searching for these frequencies first when turning the device on to obtain service more quickly.

In some embodiments, the stored radio information comprises a femtocell blacklist. In some embodiments, the method further comprises using the femtocell blacklist by refraining from or modifying scanning for the femtocell on the blacklist.

In some embodiments, the stored radio information comprises a profile for access to at least one access technology. In some embodiments, the at least one other technology comprises at least one of 802.11 and Bluetooth. In some embodiments, the profile for access to at least one technology comprises information based on past experience to help the mobile device find a particular network or cell of the at least one access technology more quickly.

In some embodiments, the stored radio information comprises unencrypted information that is also stored on the IM. In some embodiments, the unencrypted information comprises a list of forbidden PLMNs.

In some embodiments, the stored radio information comprises location based information. In some embodiments, the location based information comprises a location of at least one of a WiFi hotspot and a femtocell. In some embodiments, the method further comprises using the location based information to find the WiFi hotspot and/or femtocell faster the next time once in an area close to a location indicated by the location based information.

In some embodiments, the stored radio information comprises information identifying candidate cells for handoff from a particular cell.

Another broad aspect of the disclosure provides a computer readable medium having stored executable instructions for execution by a wireless device to implement any method or combination of one or more methods summarized above.

### Brief Description of the Drawings

Embodiments of the disclosure will now be described with reference to the attached drawings in which:
Figure 1 is a block diagram of a mobile station;
Figure 2 is a flow-chart of a method of operating using radio information stored on an RMDISRI (Removable Memory Distinct from IM with Stored Radio Information);
Figure 3 is a flow-chart for updating the information stored on an RMDISRI;
Figures 4, 5 and 6 are three different usage scenarios for mobile stations equipped with an RMDISRI;
Figure 7 is an example cell layout;
Figure 8 is a block diagram of another mobile device;
Figure 9 is an example of a serving cell table; and
Figure 10 is an example of a neighbour cell table.

### Detailed Description of the Preferred Embodiments

The radio information described herein can be in respect of any type of cell or network. A specific, non-limiting set of examples include 2G, 3G, 4G, GSM (Global System for Mobile Communications), EDGE, UMTS (Universal Mobile Telecommunications System), LTE (long term evolution).

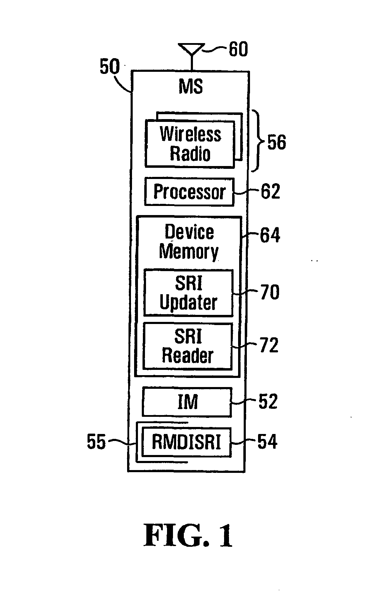

Referring to Figure 1, shown is a mobile station 50. The mobile station 50 has at least one antenna 60, a processor 62, and device memory 64 which may include non-volatile RAM, ROM and/or volatile RAM. The mobile station has a wireless radio 56, but may have multiple such wireless radios if the mobile station is a multi-mode mobile station. The mobile station 50 is shown with an IM (identity module) card 52 installed. An identity module contains standardized information, and may, for example, be a SIM (subscriber identity module), a USIM (universal subscriber identity module), or a RUIM (removable user identity module). The mobile station also has a RMDISRI (removable memory) distinct from IM (identity module) with stored radio information) 54 shown user-removably installed in RMDISRI receptacle 55. IM 52 can be removed and installed in a different mobile station as is conventional. Similarly, RMDISRI 54 can be removed by a user and installed in a different mobile station. The RMDISRI is distinct from the IM card. Of course, the mobile station may have additional components to those shown, and the components shown may be arranged/combined implemented differently than shown.

The RMDISRI 54 is a memory device, distinct from an IM, that can physically be removed by a user and installed in a different device. In some embodiments, the RMDISRI 54 is an SD (Secure Digital) card. In some embodiments, the RMDISRI 54 is a micro SD card. In some embodiments, the RMDISRI 54 is a media card.

The mobile station 50 is configured, through the implementation of one or a combination of suitable hardware, firmware, or software stored in device memory 64, to read the radio information stored on the RMDISRI 54, and to make use of the information. In addition, the mobile station 50 is configured to update the stored radio information.

In the specific example shown, device memory 64 is encoded with an SRI (stored radio information) updater module 70 executable by processor 62 responsible for updating the SRI on the RMDISRI 54, and an SRI reader module 72 executable by processor 62 responsible for reading and making use of the SRI on the RMDISRI 54. More generally an SRI updater and SRI reader may be implemented as one or a combination of hardware, firmware and software stored in a memory.

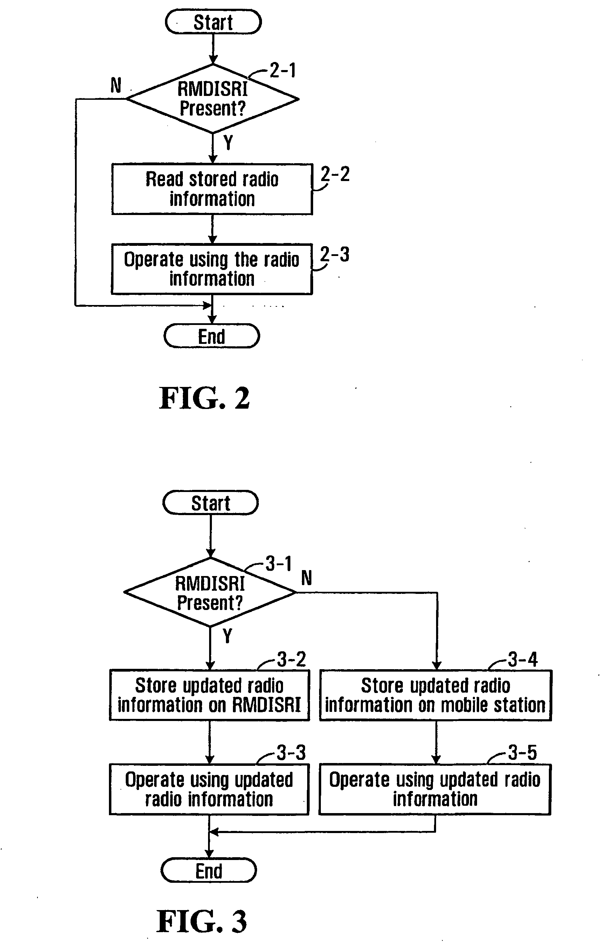

Referring now to Figure 2, shown is a flowchart of an example method by which the mobile station 50 may make use of the radio information stored on the RMDISRI 54. This method might be implemented, for example, any time the mobile station is powered on. The method begins at block 2-1 with determining whether an RMDISRI is present. This might, for example, involve determining via hardware if there is a RMDISRI present and then checking if there is radio information stored on it. If an RMDISRI is present, yes path block 2-1, then in block 2-2, the mobile station reads the stored radio information from the RMDISRI, and in block 2-3, the mobile station operates using the radio information read from the RMDISRI.

Referring now to Figure 3, shown is a flowchart of an example method by which the mobile station 50 may update the radio information stored on the RMDISRI 54. This method might be implemented, for example, any time there is a change to the radio information. The method begins at block 3-1 with determining whether an RMDISRI is present. If an RMDISRI is present, yes path block 3-1, then in block 3-2, the mobile station stores the updated radio information on the RMDISRI, and in block 3-3, the mobile station operates using the updated radio information. In some embodiments, the mobile station is further configured to implement blocks 3-4 and 3-5. If no RMDISRI is present, no path block 3-1, then in block 3-4 the mobile station stores the updated radio information elsewhere on the mobile station, and in block 3-5, the mobile station operates using the updated radio information.

Depending on the operational mode of the mobile station, the mobile station may also operate as a function of radio information stored on an IM. In some embodiments, the radio information stored on the RMDISRI overlaps partly with information stored on an IM in the sense that information representing the same thing may be stored in two places - once on the IM and once on the RMDSIRI. The information is not necessarily consistent across the two places as it may have been generated under different circumstances. The mobile station may be configured to use the information stored on the IM by default, and to use information stored on the RMDISRI, but to use the information stored on the RMDISRI where information is stored on both the IM and the RMDISRI.

In some embodiments, information may be stored both on the RMDISRI, and elsewhere on the mobile station, for example in NVRAM (non-volatile RAM). This may be the case for example when a) a mobile station is working without an RMDISRI installed, and updates radio information in non-volatile RAM and then b) an RMDISRI is installed. The mobile station may be configured to use the information stored in the RMDISRI in this case.

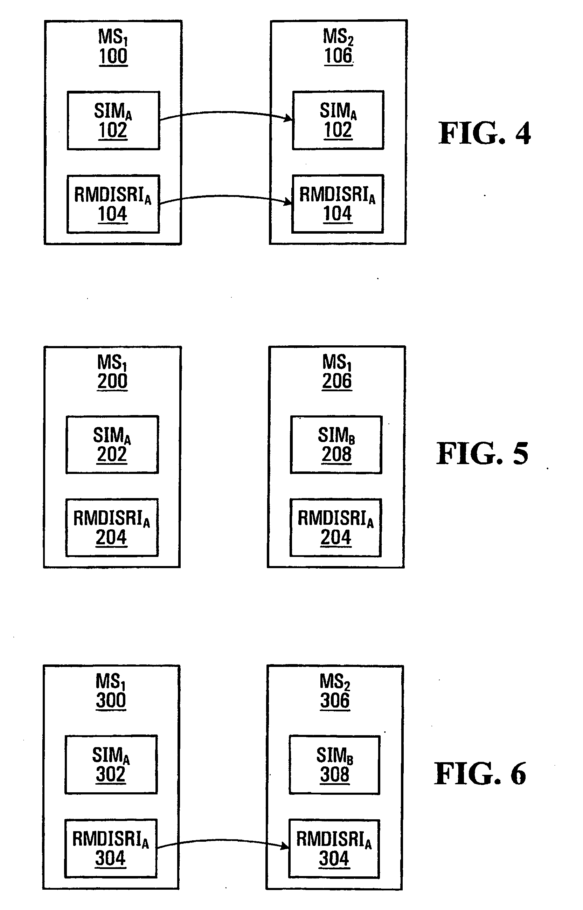

Usage scenarios will now be described with reference to Figures 4, 5 and 6. In these scenarios, it is assumed that the IM is a SIM card, but the scenarios apply equally to other types of IM. In a first usage scenario, a user takes a SIM card out of a first mobile station, and re-installs it in a second mobile station. This will now be described with reference to Figure 4. Figure 4 shows a first mobile station 100, referred to as "MS₁", and a second mobile station 106, referred to as "MS₂". The depiction of MS₁ represents MS₁ at a first time instant T₁, and the depiction of MS₂ represents MS₂ at a later time instant T₂. MS₁ 100 is depicted with SIM card SIM_{A} 102 installed and with RMDISRI_{A} 104 installed. MS₂ 106 is depicted with SIM card SIM_{A} 102 installed and with RMDISRI_{A} 104 installed. It can be seen that some time between T₁ and T₂, the SIM card SIM_{A} 102 has been removed from MS₁ 100, and installed in MS₂ 106. Similarly, some time between T₁ and T₂, RMDISRI_{A} 104 has been removed from MS₁ 100, and installed in MS_{2.}

In a second usage scenario, a user takes a SIM card out of a mobile station, and installs a different SIM card in the same mobile station. This will now be described with reference to Figure 5. Figure 5 shows a mobile station, referred to as "MS₁" at a first time instant T₁ generally indicated at 200, and shows the same mobile station MS₁ at a later time instant T₂ generally indicated at 206. MS₁ 200 is depicted with SIM card SIM_{A} 202 installed and with RMDISRI_{A} 204 installed. MS₁ 206 is depicted with SIM card SIM_{B} 208 installed and with RMDISRI_{A} 204 installed. It can be seen that some time between T₁ and T₂, the SIM card SIM_{A} 202 has been removed from MS₁ 200, and a different SIM card, namely SIM card SIM_{B} 208 has been installed in its place.

In a third usage scenario, a user uses a first mobile station and then switches to utilizing a second mobile station, and also uses a different SIM on the second mobile station. The user takes the RMDISRI out of the first device and installs it in the second mobile station. Figure 6 shows a first mobile station 300, referred to as "MS₁", and a second mobile station 306, referred to as "MS₂". The depiction of MS₁ represents MS₁ at a first time instant T₁, and the depiction of MS₂ represents MS₂ at a later time instant T₂. MS₁ 300 is depicted with SIM card SIM_{A} 302 installed and with RMDISRI_{A} 304 installed. MS₂ 106 is depicted with SIM card SIM_{B} 308 installed and with RMDISRI_{A} 304 installed. It can be seen that some time between T₁ and T₂, the RMDISRI_{A} 304 has been removed from MS₁ 100, and installed in MS₂.

RMDISRI_{A} is used to store additional radio information that is not stored on the SIM card. It may also include some information that is also stored on the SIM card.

The following is a set of examples of the type of radio information that might be stored on the RMDISRI, and corresponding examples of how this information might be used. In some embodiments, at least one, or an arbitrary combination, of the following examples are implemented. Other examples are possible. Many of the examples include the mobile station scanning for a RAT. More generally, for these examples, in some embodiments, the mobile station searches for a RAT. Searching may include scanning.

### 1. last RAT (radio access technology) the mobile station de-attached

The last RAT is an indication of the radio access technology last employed by the mobile station. A non-limiting set of examples of different RATs includes GERAN (GSM Edge Radio Access Network) and UTRAN (UMTS Terrestrial Radio Access Network). The following is a specific example of the format this information might take:
< last_RAT >

### Example usage

In a multi-mode mobile station, start scanning for the last RAT first any time a scan is to be performed.

### 2. EF-NETPAR (Elementary File - Network Parameters)

EF-NETPAR is defined, for example, in 3GPP TS 31.102 and is currently stored on a USIM. Some devices also store this in non-volatile RAM. If the user were to switch mobile stations without using the same USIM, this information would not be available on the new mobile station. When switching devices it is expected that many users will also be swapping USIM/SIMs to have a different profile. This is particularly advantageous for the third scenario (Fig. 6) described above.

### Example usage

In a specific example, the mobile device uses the EF-NETPAR stored on the RMDISRI rather than the one stored on the USIM/SIM.

### 3. UMTS (Universal Mobile Telecommunications System) frequency information

UMTS frequency information may, for example, be stored in the form of a set of the last N UMTS frequencies used by the mobile station (for example UARFCNs (UMTS Absolute Radio Frequency Number) as defined by the standards, these being numbers that each correspond to a particular frequency). N is implementation specific. This is an example of an information type that is also stored on the SIM. Specifically this information is stored on the SIM as part of the NET_PAR elementary file defined in 3GPP TS 31.102. However, when a user switches SIMs, (as in the second usage example described above), the UMTS frequency information is lost. Storing this information on the RMDISRI avoids this issue. The following is a specific example of the format this information might take:
< list of last N UARFCNs >

### Example usage

When scanning for UMTS, scan using the list of UMTS frequencies.

### 4. Fingerprinting Information For a Location

In some embodiments, information is stored based on past experience at a particular location and is used to trigger scanning for a serving cell of interest. This is referred to herein as fingerprinting information for a location. In one example, the fingerprinting information comprises an observable pattern of detectable cells at a particular location.

The cell of interest may be a particular femtocell or a particular WiFi hotspot (for example 802.11 hotspot), for example that may be one implemented at the user's home, office, or some other location. In some embodiments, the mobile station is equipped with a user interface to allow a user to specify that a particular cell, for example a cell currently being used, is a cell of interest. In other embodiments, this information is maintained for a WiFi hotspot to which the mobile station has previously successfully connected and/or for a femtocell to which the mobile station has previously successfully connected.

More generally, this type of information can be maintained for any cell of interest. Examples of cells to which this approach might be applied include femtocells, CSG cells, Home Node B, (such as a Rel 8 femto) and Home ENode B (4G femto). The cell of interest may be any size; specific non-limiting examples include so-called micro or pico cells. In addition there is a UMTS variant in China called TD-SCDMA that may be deployed in such as fashion where it may it be useful to store fingerprinting location. The TD-SCDMA deployment may be such that TD-SCDMA cells are sprinkled amongst 2G coverage - where fingerprinting can help increase or decrease the searching rate.

In some embodiments, the fingerprinting information includes cell information for a set of cells that are detected at a location within an area served by a serving cell of interest. These cells may include cells that are neighbours of the cell of interest in the sense that they are included on a neighbour list broadcast by the cell, but may also include detectable cells that are not included on the neighbour list.

Once the fingerprinting information is stored, subsequent detection of conditions matching the information is used to trigger scanning for the associated cell of interest. For example, in some embodiments, as soon as the mobile station detects at least a predetermined number (the number would be at least one) of neighbour cells identified in the fingerprinting information stored for a cell of interest, the mobile station starts scanning for that cell of interest. In another embodiment, as soon as the mobile station detects at least a predetermined number (the number would be at least one) of neighbour cells identified in the fingerprinting information stored for a cell of interest, the mobile station scans for that cell of interest more frequently than before detecting the predetermined number of neighbour cells. In another example, as soon as a mobile station connects to a neighbour cell of a cell of interest (neighbour status being determined from the fingerprinting information for the cell of interest), the mobile station intiates scanning, or modifies scanning, for example by scanning more frequency, for the cell of interest.

In some embodiments, the fingerprinting information includes cell information for a set of cells that are detected at a location within a first cell, where the mobile station had previously reselected from the first cell to a cell of interest. These cells may include cells that are neighbours of the first cell in the sense that they are included on a neighbour list broadcast by the cell, but may also include detectable cells that are not included on the neighbour list.

Once the fingerprinting information is stored, the information is used to trigger scanning for the associated serving cell. For example, in some embodiments, as soon as the mobile station detects at least a predetermined number (the number would be at least one) of neighbour cells of a given first cell for which fingerprinting information has been stored in respect of a particular cell of interest, the mobile station initiates scanning, or modifies scanning, for example by scanning more frequently, for that serving cell.

The following is a specific example of the format this information might take:
Information for Cell of Interest - this may, for example include information to allow initiation of scanning for the cell of interest:
   ■ Radio Access Technology (RAT)
   ■ Cell Type (if available) i.e. femto/Macro
   ■ CSGid (closed subscriber group identifier) (if any)
   ■ Cell Id
   ■ (U) ARFCN
   ■ Physical Cell Identity (PSC, BSIC, etc.).
Information for Neighbour cells:
   ■ Radio Access Technology (RAT)
   ■ Neighbor type (Source, Source Neighbour, Neighbour, Detected Neighbour), where a 'Source' cell is a cell camped on before reselecting to the cell of interest, a source neighbour is a neighbour of a source cell, and a 'Detected Neighbour' is a neighbour cell detected that is not listed by the cell of interest.
   ■ Cell Type
   ■ CSGid (if any)
   ■ Cell Id
   ■ (U)ARFCN
   ■ Physical Cell Identity (PSC, BSIC, etc.)
   ■ CSG Split Info

### 5. Fingerprinting Information For a Route

In some embodiments, information is stored based on past experience en route to a particular serving cell of interest and is used to trigger scanning behaviour for the serving cell of interest. This is referred to herein as fingerprinting information for a route. In one example, the fingerprinting information identifies an observable pattern of cells to which the mobile station has previously connected en route to a serving cell of interest.

The cell of interest for this example can be any cell. The set of examples provided for item 4 described above also applies here.

In a specific example, on an ongoing basis the mobile station stores a sequential history of some number of cells to which the mobile station has connected, for example the last 10. Then, once the mobile station connects to a serving cell of interest (either a new cell of interest, or a cell previously identified as a cell of interest) some or all of the stored sequential history is stored as fingerprint information in association with the cell of interest. For example, a user who travels from work to home each day will traverse the same route, and will often experience the same sequence of cells.

Subsequently, when the stored sequential history contains a sequence of cells that matches a sequence stored in association with a particular cell, the mobile station initiates scanning, or modifies scanning, for example by scanning more frequently, for the particular cell.

### 6. Scanning Information

This category is generally defined as any information that is determined based on user preferences or past history that can be used to help reduce scanning time. In a specific example, this information may simply include the last N frequencies and networks (also referred to as PLMNs (Public Land Mobile Network) where service was successfully obtained or successfully detected.

### Example usage

The scanning information is used when scanning for a network. There are multiple scenarios where this might be applied that include, for example when the mobile station is turned on, or when the mobile station is returning from out of coverage.

In some embodiments, high Priority PLMN scanning is utilized when roaming (home network not available). On the USIM/SIM there are priority order preferred network lists (e.g. preferred PLMN list) for roaming and the mobile station selects the available network with the highest priority. If the network available is not the highest priority network on the list then the mobile station periodically searches for networks that have a higher priority.

In some embodiments, the frequencies upon which one or more highest priority networks have been seen are stored on the RMDISRI. By storing the information where a given network may have been seen, the mobile station can scan these frequencies first when it is time to search for that network, for example in accordance with the priority order. Similarly, if a network with a low priority is seen on a given frequency, this information can be stored; then the mobile station can modify scanning for the higher priority network on the frequency used by the lower priority network for example by at least initially skipping scanning for the frequency.

### 7. EFs (Elementary Files) related to CSGs (closed subscriber groups)

These new EFs are defined in Release 8 3GPP TS 31.102. The EFs defined include:
EFACSGL (Allowed CSG Lists)
EFCSGI (CSG Indication)
EFHNBN (Home (e)NodeB Name)

These new EFs are for femtocells where the femtocells belong to CSG groups. This may be stored on both the USIM and NVRAM. If the user starts using a different mobile station and a different SIM, the information will not be available on the new device. By including it on the RMDISRI, it can be made available.

### Example usage

After a mobile station successfully registers on a CSG cell, the information about the cell is stored as such in the EFs above. This includes the PLMN of the network, CSG id and optionally the CSG Indication (EFCSGI) or Home (e)NodeB Name (EFHNBN). This information is stored in priority ordered similar to EFACSGL (Allowed CSG Lists).

### 8. Whitelists/Blacklists of cells/networks

This relates to femtocells, or to networks (for example in CDMA) where cells/networks are placed on a whitelist or blacklist as a function of whether there has been a successful registration (whitelist) or a failed registration (blacklist). These lists may also be stored in memory/NVRAM so may be lost without swapping them with RMDISRI. If the same USIM/RUIM is used on the new device, unnecessary registration attempts would occur on cells/networks from the blacklist with service interruptions and battery usage.

For the whitelist, information is stored for networks for which there was a successful registration. Information about the cell/network would be stored such as the PLMN (Cell Global Identity), Frequency, etc.

For the blacklist, information is stored for networks for which there was no successful registration. The information stored could be similar to that stored for the whitelist and may in addition include an indication of a type of rejection indicating a cause of failure of the unsuccessful registration.

### Example usage

This information could be used to enable the mobile station to register with whitelist cells/networks more quickly and ignore or attempt to register with blacklist cells less often. This will improve the speed to obtain service from whitelist cells/networks and reduce service interruptions and battery consumption from attempting to register to blacklist cells/networks. The type of rejection from black list cells may be stored and used as a basis for relatively faster retry.

### 9. Last N systems

This is a list of the last N systems and frequencies successfully connected to. This list can be for a single RAT for a single mode mobile station, or can be a list that includes entries for multiple RATs for a multi-node mobile station. The following is a specific example of the format this information might take:
< list of last N UMTS networks and last N UARFCNs >

### Example usage

This could be used to search for these frequencies first when turning the device on to obtain service more quickly.

### 10. Femtocell blacklist

This can, for example, be similar to blacklists defined above, but specifically for femtocells. The following is a specific example of the format this information might take:

for each blacklisted cell, an identifier such as the Cell Global ID, optionally some other information about the cell, such as fingerprint information (see examples above).

### Example usage

A mobile station may be rejected attempting to register on a femtocell from its home network (HPLMN). When that occurs, information identifying the femtocell is added to the blacklist. Then, in the future a mobile station would ignore or modify scanning for femtocells, for example by scanning for femtocells on the blacklist less often to conserve battery life and reduce service interruptions.

### 11. Information about other technologies such as 802.11 or bluetooth connections

A mobile station may store a list of profiles for access to other technologies such as 802.11 or Bluetooth. The information could include the information required to successfully obtain service such as password, PIN code, etc. In some embodiments, the "other technologies" are stored in priority order. In some embodiments, fingerprinting information is stored to enable the mobile station to find the access points for the other technologies more quickly.

### Example usage

Rather than the user manually searching or entering the information required to obtain service for the other technology, such as 802.11 for example, the information from the stored profile can be utilized. The fingerprinting information is utilized to initiate or modify scanning for a stored profile when the fingerprint is recognized.

### 12. Unencrypted information stored on the USIM/SIM

In some embodiments some of the unencrypted information stored on the USIM/SIM is also stored on the RMDISRI. A specific example includes the EF FPLMN (Forbidden PLMNs) that lists the forbidden PLMNs.

The network information stored in EF NET_PAR could be optimized for a different USIM/SIM depending upon whether the new USIM/SIM is one of the previous Forbidden PLMNs. For example when switching such as in Fig 5 or 6. If the new HPLMN was previously on a forbidden list, the order of frequencies searched could be different (i.e. searching for NETPAR frequencies with lower priority).

This is somewhat similar to the example 6 above where the presence of networks at certain frequencies will enable the device to either find these networks more quickly or avoid the frequencies in searching for a different network.

For example if a user changes SIMs from a SIM for a first network to a SIM for a second network in the same country where the two networks do not allow roaming on each, the first network becomes a forbidden network, or "Forbidden PLMN". By storing this forbidden network information on the RMDISRI, and by storing a set of frequencies of the forbidden network (for example as determined from NETPAR prior to switching networks), the frequencies of the forbidden network can be used to avoid searching the frequencies of the forbidden network. So in this example if the SIM is swapped from the first network to the second network, the mobile station can skip scanning NETPAR frequencies for the first network, or at least de-prioritize them when searching for the second network.

In addition, in some embodiments, additional information is stored on the RMDISRI about Forbidden PLMNs found when using the SIM for the first network in memory. This may include information about frequencies used by the Forbidden PLMNs from the first network's perspective, and these may include the second network. This then enable the mobile station to begin scanning directly with these frequencies of the second network.

### 13. Location based information

This may, for example, include the location of WiFi hotspots and/or femtocells. The following is a specific example of the format this information might take:
< GPS co-ordinates for WiFi hotspots and/or femtocells >

### Example usage

The GPS co-ordinates of a WiFi hotspot and/or femtocell are stored upon detection and are then used to find the WiFi hotspot and/or femtocell faster the next time once in an area close to the GPS location.

### 14. Candidate information

In some cells of some networks of a first RAT, a mobile device will reselect to a second RAT due to bad coverage. For example, a mobile station may reselect to a 2G cell from a 3G cell. Having reselected, the neighbour list for the new cell may not include neighbour cells of the first RAT. However, neighbours of the cell of the second RAT may advertise a more complete set of neighbours, including neighbours of the first RAT. As such, in some embodiments, the mobile station stores neighbour information in respect of neighbours of a particular cell of the first RAT. The mobile station may, for example, learn this by monitoring the broadcast information from the cell of the first RAT, either while still connected to the first RAT, or after re-selecting to the second RAT. Then, when the mobile station finds itself connected to the particular cell, it uses the stored neighbour information to allow it to attempt to reconnect to a cell of the first RAT when appropriate. This approach is described in detail in Commonly-assigned co-pending Application No. 12/356,710 filed January 21, 2009 entitled "Method and device for obtaining Candidate Information" hereby incorporated by reference in its entirety. The information may for example include a set of candidate cells or frequencies and possibly zero or more not allowed cells associated with frequencies of a first RAT from a message transmitted for a neighbour cell of the serving cell on the second RAT. The following is a specific example of the format this information might take:
Serving Cell:
   ■ Radio Access Technology (RAT)
   ■ Cell Type (if available) i.e. femto/Macro
   ■ CSGid (if any)
   ■ Cell Id
   ■ (U)ARFCN
   ■ Physical Cell Identity (PSC, BSIC, etc.).
Candidate Cell:
   ■ Radio Access Technology (RAT)
   ■ (U) ARFCN
   ■ Physical Cell Identity (PSC, BSIC, etc.).

### Example usage

This information could be used to reselect to a cell in a first RAT more quickly without having to wait to obtain information from a neighbor cell when the serving cell in the second RAT does not provide all the viable cells or frequencies in the first RAT.

### Further Fingerprinting Information Embodiments

Examples 4 and 5 above have dealt with fingerprinting information in respect of a location or a route, and in particular to the storage of this information on a RMDISRI, and subsequent use of the information. Further embodiments provide for the storage and use of fingerprinting information, in respect of a location and/or a route, stored on a mobile device in a memory which may or may not be an RMDISRI. For example, the information might be stored in NVRAM.

The following description provides details of examples of fingerprinting information which may relate to fingerprinting information stored on an RMDISRI, or elsewhere in the mobile device.

In some embodiments, once a CSG cell, Home NodeB cell, Home E-NodeB cell has been successfully found, location based information that may be useful in the future is stored as fingerprinting information in respect of the CSG cell, Home NodeB cell or Home E-NodeB cell. This information, which may for example include an identification of surrounding cells, may be used to improve the speed of cell reselection to the cell and improve battery life by reducing unnecessary searching. In some embodiments, the information stored is structured to take into account that there may be a mixture of Release compliant devices and networks. For example CSG information is only available in Release 8 yet a Release 5 device may camp on a CSG cell. The reverse is also possible where a Release 8 device may camp on a Release 6 femto cell (i.e. Home NodeB). Furthermore the information stored may be swapped between devices such as via a USIM, external memory card or NVRAM. Therefore information stored by a Release 5 device may be used by a Release 8 device.

Information gathering may be passive and/or active. Passive information gathering includes storing information that is dictated within the specifications for normal operation such as storing the UARFCN and scrambling code of the source macro cell before reselecting to the CSG cell or the CSG information from the System Information. Active information gathering may, for example include searching for detected cells (i.e. "detected set" in 25.331 section 8.4.0) or cells from another RAT (i.e. LTE, 2G, 802.11, 3GPP2) that may not be dictated by the network. Active information gathering duties dictated by the specifications may use information such as neighbor cell information from the serving CSG/femto cell or other means such as the source macro cell.

By either active or passive means the greater the information gathered, more precise search algorithms may be utilized to enable faster reselection, reduced searching, etc. For example a device may reselect directly from a 2G cell to a 3G Femto cell on a URAFCN not signaled by the network as part of the neighbor information without direction from the network. A device may also use the information even though system information indicates the possible presence of a CSG cell such as the CSG PSC Split Information (25.331, 44.018, 36.331).

Example table layouts that may be stored on a device per CSG cell/Home NB/ENB and the source cell before reselection (if any) are provided below. This is an example for the information that may be stored and does not include 3GPP2 info or other access technologies which may also be included. The actual information stored can be defined on an implementation specific or cell-dependent basis, for example depending upon whether the cell is a CSG cell, hybrid cell, etc.

### Information Stored per Serving Cell of Interest (may involve the use of multiple tables/presence indicators)

### UMTS source cell

PLMN, Cell Id, UARFCN, PSC, Info from SIB3/SIB11bis (CSG PSC Split Information/ Dedicated CSG frequency list), cell type/size (e.g. Femto, Macro, Home NodeB etc.)

### GSM source cell

PLMN, Cell Id, ARFCN, BSIC, Info from SI2quater (CSG split info UTRAN/EUTRAN), cell type/size (e.g. Femto, Macro, Pico)

### LTE source cell

PLMN, Cell Id, ARFCN, Physical Cell Identity, Info SystemInformationBlockType5 (csg-PhysCellIdRange), cell type/size (e.g. Femto, Macro, Home eNodeB etc.)

### Serving Cell Neigbour Info (via passive or active information gathering) if available and if detected

2G cells - Cell Id, ARFCN, BSIC, Info from SI2quater (CSG split info UTRAN/EUTRAN)

UTRAN cells - Cell Id, UARFCN, PSC, Info from SIB3/SIB11bis (CSG PSC Split Information/ Dedicated CSG frequency list), neighbors

LTE cells - Cell Id, ARFCN, Physical Cell Identity, Info SystemInformationBlockType5 (csg-PhysCellIdRange)

802.11 - MAC id, Band, Channel

With this information, if a mobile station is on a cell from the neighbor list/source cell list above, the mobile station can then search for the corresponding CSG/Home H(E)NB. Note that the USIM may store the EFACSGL (Allowed CSG Lists) but this does not include any RF related information.

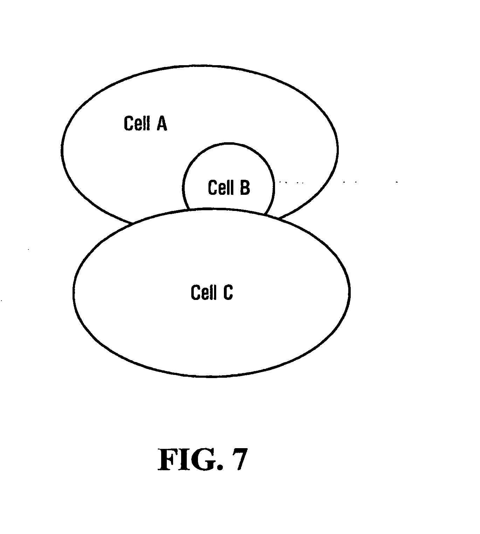

As a specific example, referring now to Figure 7, a mobile station may camp onto a 2G cell (Cell C) for the first time in the coverage area of a Femto cell (Cell B). Now as the device previously camped onto UMTS Femto cell (Cell B) reselecting from UMTS macro cell (Cell A) - the mobile station stores the neighbor information that includes the 2G cell (Cell C). This enables the device to directly intelligently detect and reselect to Cell C from Cell B without any explicitly provided neighbor information from the network.

The serving cell table can be used to hold the information about serving CSG or Femto cells. The neighbor cell table may include a number of different types of neighbors. This is just an example. Neighbor cell types:
- SOURCE - is the serving cell at the time the CSG cell was detected
- SOURCE NEIGBOUR - is a neighbor of the 'SOURCE' cell from its system information
- SOURCE NEIGBOUR DETECTED - is a neighbor of the 'SOURCE' cell that has been detected
- NEIGBOUR - is a neighbor cell of the 'SERVING' cell from its system information
- DETECTED NEIGBOUR - is a neighbor cell of the serving CSG/Femto/Home NB cell that has been detected

The neighbor cell table can be utilized as a lookup table. When a mobile station is camped on a cell within the neighbor table it can use the stored information to reselect to a CSG cell, etc. more quickly and accurately. This information can be used in conjunction with any information stored on the USIM such as the Allowed CSG Lists. Further information could also be added about CSG lists that are no allowed, etc.

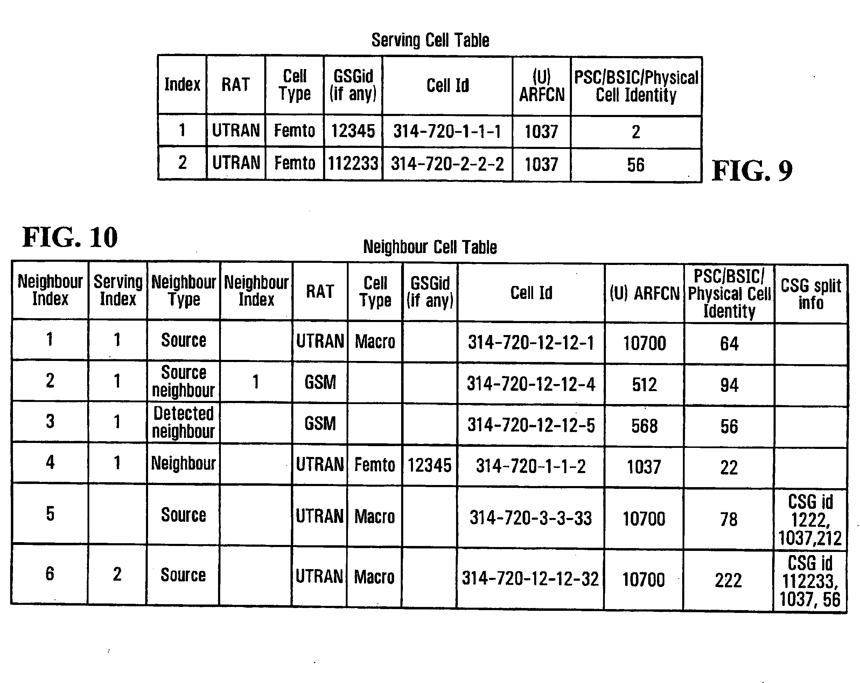

With reference to Figures 9 and 10, a serving cell table and neighbour cell table are provided for example purposes and are discussed below in Examples 1, 2 and 3.

### Example 1:

In a first example, the device finds and successfully selects a UTRAN CSG Femto cell (Serving cell Index '1') that is a neighbor of a macro UTRAN cell. There is no CSG Information provided by the source UTRAN macro cell. While on both the serving cell and the source cell the device detects additional neighbors not listed in the system information. Therefore the device is able to determine that whilst camped GSM cell ARFCN 568 (neighbor index '3') that is a 'detected neighbor' the CSG cell may be in coverage and can reselect more quickly.

### Example 2:

In a second example, a cell provides CSG Split information (neighbor cell index '5') about the possible availability of a neighbor CSG cell. However whilst camped on this cell no CSG cell is actually found so no linkage from the neighbor cell table to the serving cell table. This information may be used to reduce the searching for the CSG cell.

### Example 3:

In a third example, Serving Cell index '2' has been located by the CSG split info provided by the Source Cell (neighbor Cell index `6'). With this information the device may increase its searching of the CSG cell when in coverage of the Source Cell.

### Another Mobile Station

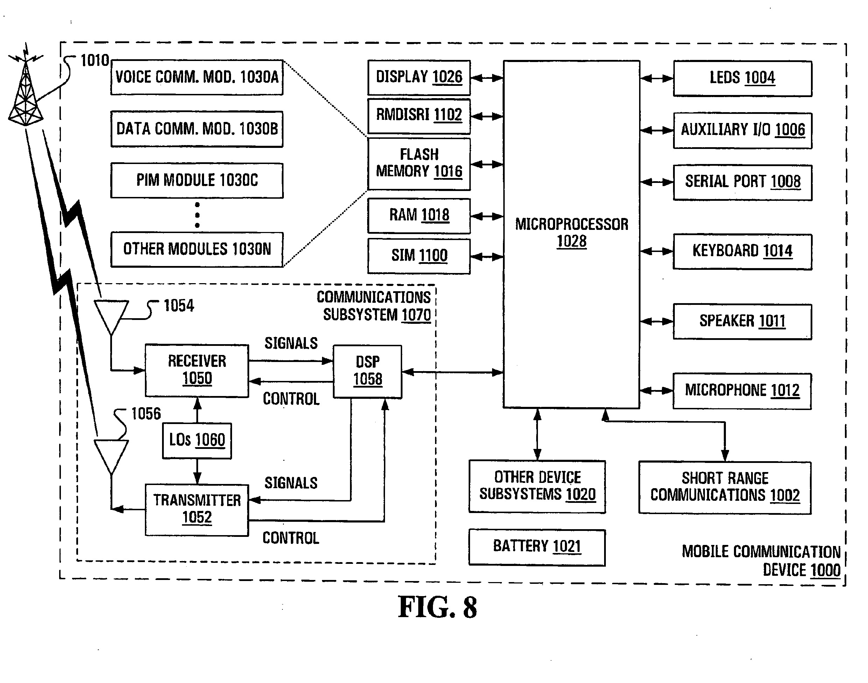

Referring now to Figure 8, shown is a block diagram of a mobile station 1000 that may implement mobile station related methods described herein. It is to be understood that the mobile station 1000 is shown with very specific details for example purposes only. The mobile station 1000 has a SIM 1100 and an RMDISRI 1102.

A processing device (a microprocessor 1028) is shown schematically as coupled between a keyboard 1014 and a display 1026. The microprocessor 1028 controls operation of the display 1026, as well as overall operation of the mobile station 1000, in response to actuation of keys on the keyboard 1014 by a user.

The mobile station 1000 has a housing that may be elongated vertically, or may take on other sizes and shapes (including clamshell housing structures). The keyboard 1014 may include a mode selection key, or other hardware or software for switching between text entry and telephony entry.

In addition to the microprocessor 1028, other parts of the mobile station 1000 are shown schematically. These include: a communications subsystem 1070; a short-range communications subsystem 1002; the keyboard 1014 and the display 1026, along with other input/output devices including a set of LEDS 1004, a set of auxiliary I/O devices 1006, a serial port 1008, a speaker 1011 and a microphone 1012; as well as memory devices including a flash memory 1016 and a Random Access Memory (RAM) 1018; and various other device subsystems 1020. The mobile station 1000 may have a battery 1021 to power the active elements of the mobile station 1000. The mobile station 1000 is in some embodiments a two-way radio frequency (RF) communication device having voice and data communication capabilities. In addition, the mobile station 1000 in some embodiments has the capability to communicate with other computer systems via the Internet.

Operating system software executed by the microprocessor 1028 is in some embodiments stored in a persistent store, such as the flash memory 1016, but may be stored in other types of memory devices, such as a read only memory (ROM) or similar storage element. In addition, system software, specific device applications, or parts thereof, may be temporarily loaded into a volatile store, such as the RAM 1018. Communication signals received by the mobile station 1000 may also be stored to the RAM 1018.

The microprocessor 1028, in addition to its operating system functions, enables execution of software applications on the mobile station 1000. A predetermined set of software applications that control basic device operations, such as a voice communications module 1030A and a data communications module 1030B, may be installed on the mobile station 1000 during manufacture. In addition, a personal information manager (PIM) application module 1030C may also be installed on the mobile station 1000 during manufacture. The PIM application is in some embodiments capable of organizing and managing data items, such as e-mail, calendar events, voice mails, appointments, and task items. The PIM application is also in some embodiments capable of sending and receiving data items via a wireless network 1010. In some embodiments, the data items managed by the PIM application are seamlessly integrated, synchronized and updated via the wireless network 1010 with the device user's corresponding data items stored or associated with a host computer system. As well, additional software modules, illustrated as other software module 1030N, may be installed during manufacture. In addition, the microprocessor 1028 executes SRI updating and SRI reading functions.

Communication functions, including data and voice communications, are performed through the communication subsystem 1070, and possibly through the short-range communications subsystem 1002. The communication subsystem 1070 includes a receiver 1050, a transmitter 1052 and one or more antennas, illustrated as a receive antenna 1054 and a transmit antenna 1056. In addition, the communication subsystem 1070 also includes a processing module, such as a digital signal processor (DSP) 1058, and local oscillators (LOs) 1060. The specific design and implementation of the communication subsystem 1070 is dependent upon the communication network in which the mobile station is intended to operate. For example, the communication subsystem 1070 of the mobile station 1000 may be designed to operate with the Mobitex™, DataTAC™ or General Packet Radio Service (GPRS) mobile data communication networks and also designed to operate with any of a variety of voice communication networks, such as Advanced Mobile Phone Service (AMPS), Time Division Multiple Access (TDMA), Code Division Multiple Access CDMA, Personal Communications Service (PCS), Global System for Mobile Communications (GSM), etc. Other types of data and voice networks, both separate and integrated, may also be utilized with the mobile station 1000.

Network access may vary depending upon the type of communication system. For example, in the Mobitex™ and DataTAC™ networks, mobile stations are registered on the network using a unique Personal Identification Number (PIN) associated with each device. In GPRS networks, however, network access is typically associated with a subscriber or user of a device. A GPRS device therefore typically has a subscriber identity module, commonly referred to as a Subscriber Identity Module (SIM) card, in order to operate on a GPRS network.

When network registration or activation procedures have been completed, the mobile station 1000 may send and receive communication signals over the communication network 1010. Signals received from the communication network 1010 by the receive antenna 1054 are routed to the receiver 1050, which provides for signal amplification, frequency down conversion, filtering, channel selection, etc., and may also provide analog to digital conversion. Analog-to-digital conversion of the received signal allows the DSP 1058 to perform more complex communication functions, such as demodulation and decoding. In a similar manner, signals to be transmitted to the network 1010 are processed (e.g., modulated and encoded) by the DSP 1058 and are then provided to the transmitter 1052 for digital to analog conversion, frequency up conversion, filtering, amplification and transmission to the communication network 1010 (or networks) via the transmit antenna 1056.

In addition to processing communication signals, the DSP 1058 provides for control of the receiver 1050 and the transmitter 1052. For example, gains applied to communication signals in the receiver 1050 and the transmitter 1052 may be adaptively controlled through automatic gain control algorithms implemented in the DSP 1058.

In a data communication mode, a received signal, such as a text message or web page download, is processed by the communication subsystem 1070 and is input to the microprocessor 1028. The received signal is then further processed by the microprocessor 1028 for an output to the display 1026, or alternatively to some other auxiliary I/O devices 1006. A device user may also compose data items, such as e-mail messages, using the keyboard 1014 and/or some other auxiliary I/O device 1006, such as a touchpad, a rocker switch, a thumb-wheel, or some other type of input device. The composed data items may then be transmitted over the communication network 1010 via the communication subsystem 1070.

In a voice communication mode, overall operation of the device is substantially similar to the data communication mode, except that received signals are output to a speaker 1011, and signals for transmission are generated by a microphone 1012. Alternative voice or audio I/O subsystems, such as a voice message recording subsystem, may also be implemented on the mobile station 1000. In addition, the display 1016 may also be utilized in voice communication mode, for example, to display the identity of a calling party, the duration of a voice call, or other voice call related information.

The short-range communications subsystem 1002 enables communication between the mobile station 1000 and other proximate systems or devices, which need not necessarily be similar devices. For example, the short-range communications subsystem may include an infrared device and associated circuits and components, or a Bluetooth™ communication module to provide for communication with similarly-enabled systems and devices.

Other embodiments provide a computer readable medium having stored executable instructions for execution by a wireless device to implement any of the methods described herein.

Numerous modifications and variations of the present disclosure are possible in light of the above teachings. It is therefore to be understood that within the scope of the appended claims, the disclosure may be practiced otherwise than as specifically described herein.

## Claims

1. A mobile station (50) comprising:
at least one antenna (60);
an identity module (IM) (52);
at least one wireless radio (56);
a removable memory distinct from IM with stored radio information (RMDISRI) receptacle (55);
wherein the mobile station (50) is configured to determine if an RMDISRI (54) is installed in said RMDISRI receptacle (55), and if it has been determined that there is an RMDISRI (54) installed in said RMDISRI receptacle (55), make use of radio Information stored on the RMDISRI (62,70,72) in operating the at least one wireless radio when scanning for a network or cell;
wherein for radio information of a particular type that is stored both on the RMDISRI (54) and the IM (52), the mobile station (50) is configured to use the information stored on the RMDISRI (54).

2. The mobile station (50) of claim 1 further comprising:
an RMDISRI (54) installed in said RMDISRI receptacle (55).

3. The mobile station (50) of claim 1 further comprising a device memory (64) distinct from the IM (52) and the RMDISRI (55);
wherein for radio information of a particular type that is stored both on the RMDISRI (55) and the device memory (64), the mobile station (50) is configured to use the information stored on the RMDISRI (55).

4. The mobile station (50) of claim 1 wherein the mobile station (50) is configured to update radio information by determining if an RMDISRI (54) is installed in said RMDISRI receptacle (55), and it has been determined that there is an RMDISRI (54) installed in said RMDISRI receptacle (55), store an update to the radio information stored on the RMDISRI (54).

5. A method in a mobile station (50) having an identity module (IM) (52), the method comprising:
determining (2-1) if a removable memory distinct from IM with stored radio information (RIMDISRI) (54) is installed in an RMDISRI receptacle (55); and
if it has been determined there is an RMDISRI (54) installed in said RMDISRI
receptacle (55), making use of radio information (2-3) stored on the RMDISRI (54) in operating at least one wireless access radio when scanning for a network or cell;
for radio information of a particular type that is stored both on the RMDISRI (54) and an identity module (IM) (52), using the information stored on the RMDISRI (54).

6. The method of claim 5 further comprising:
for radio information of a particular type that is stored both on the RMDISRI (54) and a device memory (64), using the information stored on the RMDISRI (54).

7. The method of claim 5 further comprising updating radio information by:
determining (3-1) if an RMDISRI (54) is installed in said RMDISRI receptacle (55);
upon determining there is an RMDISRI (54) installed in said RMDISRI receptacle (55), storing (3-2) an update to the radio information stored on the RMDISRI (54).

8. The method of claim 5 wherein the stored radio information comprises at least one of:
Information identifying a last RAT (radio access technology) the mobile station (50) de-attached;
some or all of Elementary File - Network Parameters (EF-NETPAR);
information identifying the last N Universal Mobile Telecommunications System (UMTS) frequencies used by the mobile station (50);
information based on past experience stored in association with a serving cell of interest;
information based on past experience stored in association with a serving cell of interest comprising an observable pattern of detectable cells at a particular location;
information based on past experience stored in association with a serving cell of interest, wherein the serving cell of interest is one of a femtocell and a a WiFi hotspot;
information based on past experience en route to a serving cell of interest;
information based on past experience en route to a serving cell of interest, wherein the serving cell of interest is one of a femtocell and a WiFi hotspot.

9. The method of claim 8 further comprising at least one of:
using the information identifying a last RAT the mobile station (50) de-attached by starting scanning for the last RAT first any time a scan is to be performed;
using the EF-NETPAR stored on the RMDISRI (54) rather than an EF-NETPAR stored on the IM (52).
using the information identifying the last N UMTS frequencies used by the mobile station (50) by when scanning for UMTS, scanning using the information;
using the information based on past experience in association with a serving cell of interest by monitoring observable information to determine if it is consistent with the information based on past experience, and if monitored observable information is consistent with the information based on past experience, initiating or modifying scanning for the serving cell of interest;
using information based on past experience en route to the serving cell of interest by monitoring observable information to determine if it is consistent with the information based on past experience en route to the serving cell of interest, and if monitored observable information is consistent with the information en route to the serving cell of interest, initiating or modifying scanning for the serving cell of interest.

10. The method of claim 5 wherein the stored radio information comprises at least one of:
information that is determined based on user preferences or past history that can be used to help reduce scanning time;
elementary files (EFs) related to closed subscriber groups (CSGs).

11. The method of claim 5 wherein the stored radio information comprises at least one of:
a white list of cells where registration was successful previously;
a black list of cells where registration was unsuccessful previously;
a white list of networks where registration was successful previously;
a black list of networks where registration was unsuccessful previously;
information identifying a last N systems and frequencies successfully connected to;
a femtocell blacklist;
a profile for access to at least one access technology;
a profile for access to at least one access technology wherein the at least one other technology comprises at least one of 802.11 and Bluetooth;
a profile for access to at least one access technology, wherein the profile for access to at least one technology comprises information base on past experience to help the mobile station (50) find a particular network or cell of the at least one access technology more quickly;
unencrypted information that is also stored on the IM (52);
unencrypted information that is also stored on the IM (52), wherein the unencrypted information comprises a list of forbidden PLMNs;
location based information;
location based information comprising a location of at least one of a Wifi hotspot and a femtocell;
information identifying ca ndidate cells for handoff from a particular cell.

12. The method of claim 11 further comprising at least one of:
scanning based on at least one of the white list of cells, black list of cells, white list of networks, and black list of networks;
using the information identifying the last N systems and frequencies successfully connected to by searching for these frequencies first when turning the mobile station (50) on to obtain service more quickly;
using femtocell blacklist by refraining from or modifying scanning for the femtocell on the blacklist;
using the location based information to find the WiFi hotspot and/or femtocell faster the next time once in an area close to a location indicated by the location based information.

13. A computer readable medium having stored executable instructions for execution by a wireless device to implement the method of any one of claims 5 to 12.

## Patentansprüche

1. Eine mobile Station (50), die aufweist:
zumindest eine Antenne (60);
ein Identitätsmodul (IM - identity module) (52);
zumindest eine drahtlose Funkvorrichtung (56);
einen Anschluss (55) für einen entfernbaren Speicher, verschieden von dem IM, mit gespeicherter Funkinformation (RMDISRI - removable memory distinct from IM with stored radio information);
wobei die mobile Station (50) konfiguriert ist, zu bestimmen, ob ein RMDISRI (54) an dem RMDISRI-Anschluss (55) installiert ist, und wenn bestimmt wird, dass ein RMDISRI (54) an dem RMDISRI-Anschluss (55) installiert ist, Verwenden von Funkinformation, die auf dem RMDISRI (62, 70, 72) gespeichert ist, zum Betreiben der zumindest einen drahtlosen Funkvorrichtung bei einem Abtasten hinsichtlich eines Netzwerks oder einer Zeile;
wobei für eine Funkinformation eines bestimmten Typs, die sowohl auf dem RMDISRI (54) als auch dem IM (52) gespeichert ist, die mobile Station (50) konfiguriert ist zum Verwenden der Information, die auf dem RMDISRI (54) gespeichert ist.

2. Die mobile Station (50) gemäß Anspruch 1, die weiter aufweist:
einen RMDISRI (54), der an dem RMDISRI-Anschluss (55) installiert ist.

3. Die mobile Station (50) gemäß Anspruch 1, die weiter aufweist einen Gerätespeicher (64), verschieden von dem IM (52) und dem RMDISRI (55);
wobei für eine Funkinformation eines bestimmten Typs, die sowohl auf dem RMDISRI (55) als auch dem Gerätespeicher (64) gespeichert ist, die mobile Station (50) konfiguriert ist zum Verwenden der information, die auf dem RMDISRI (55) gespeichert ist.

4. Die mobile Station (50) gemäß Anspruch 1, wobei die mobile Station (50) konfiguriert ist zum Aktualisieren von Funkinformation durch Bestimmen, ob ein RMDISRI (54) an dem RMDISRI-Anschluss (55) installiert ist, und wenn bestimmt wird, dass ein RMDISRI (54) an dem RMDISRI-Anschluss (55) installiert ist, Speichern einer Aktualisierung der Funkinformation, die auf dem RMDISRI (54) gespeichert ist.

5. Verfahren in einer mobilen Station (50), die ein Identitätsmodul (IM - identity module) (52) hat, wobei das Verfahren aufweist:
Bestimmen (2-1), ob ein entfernbarer Speicher, verschieden von dem IM,
mit gespeicherter Funkinformation (RMDISRI - removable memory distinct from IM with stored radio information) (54) an einem RMDISRI-Anschluss (55) installiert ist; und
und wenn bestimmt wird, dass ein RMDISRI (54) an dem RMDISRI-Anschluss (55) installiert ist, Verwenden von Funkinformation, (2-3), die auf dem RMDISRI (54) gespeichert ist, zum Betreiben zumindest einer drahtlosen Zugangsfunkvorrichtung bei einem Abtasten hinsichtlich eines Netzwerks oder einer Zelle;
für eine Funkinformation eines bestimmten Typs, die sowohl auf dem RMDISRI (54) als auch einem Identitätsmodul (IM - identity module) (52) gespeichert ist, Verwenden der Information, die auf dem RMDISRI (54) gespeichert ist.

6. Das Verfahren gemäß Anspruch 5, das weiter aufweist:
für Funkinformation eines bestimmten Typs, die sowohl auf dem RMDISRI (54) als auch einem Gerätespeicher (64) gespeichert ist, Verwenden der Information, die auf dem RMDISRI (54) gespeichert ist.

7. Das Verfahren gemäß Anspruch 5, das weiter aufweist ein Aktualisieren von Funkinformation durch:
Bestimmen (3-1), ob ein RMDISRI (54) an dem RMDISRI-Anschluss (55) installiert ist;
bei einem Bestimmen, dass ein RMDISRI (54) an dem RMDISRI-Anschluss (55) installiert ist, Speichern (3-2) einer Aktualisierung der Funkinformation, die auf dem RMDISRI (54) gespeichert ist.

8. Das Verfahren gemäß Anspruch 5, wobei die gespeicherte Funkinformation zumindest eines aufweist aus:
Information, die eine letzte Funkzugangstechnologie (RAT - radio access technology) identifiziert, von der die mobile Station (50) getrennt wurde;
einige oder alle EF-NETPAR (Elementary File - Network Parameters);
Information, die die letzten N UMTS(Universal Mobile Telecommunications System)-Frequenzen identifiziert, die von der mobilen Station (50) verwendet werden;
Information basierend auf vergangener Erfahrung, die in Verbindung mit einer liefernden Zelle von Interesse gespeichert ist;
Information basierend auf vergangener Erfahrung, die in Verbindung mit einer liefernden Zelle von Interesse gespeichert ist, die ein beobachtbares Muster von erfassbaren Zellen an einem bestimmten Ort aufweist;
Information basierend auf vergangener Erfahrung, die in Verbindung mit einer liefernden Zelle von Interesse gespeichert ist, wobei die liefernde Zelle von Interesse eine aus einer Femtozelle und einem WiFi-Hotspot ist;
Information basierend auf vergangener Erfahrung auf dem Weg zu einer liefernden Zelle von Interesse;
Information basierend auf vergangener Erfahrung auf dem Weg zu einer liefernden Zelle von Interesse, wobei die liefernde Zelle von Interesse eine aus einer Femtozelle und einem WiFi-Hotspot ist.

9. Das Verfahren gemäß Anspruch 8, das weiter aufweist zumindest eines aus:
Verwenden der Information, die eine letzte Funkzugangstechnologie (RAT - radio access technology) identifiziert, von der die mobile Station (50) getrennt wurde, durch zuerst Starten eines Abtastens hinsichtlich der letzten RAT, jedes Mal, wenn ein Abtasten durchzuführen ist;
Verwenden des EF-NETPARs, der auf dem RMDISRI (54) gespeichert ist,
statt eines EF-NETPARs, der auf dem IM (52) gespeichert ist;
Verwenden der Information, die die letzten N UMTS-Frequenzen identifiziert, die von der mobilen Station (50) verwendet wurden, bei einem Abtasten hinsichtlich UMTS, durch Abtasten unter Verwendung der Information;
Verwenden der Information basierend auf vergangener Erfahrung in Verbindung mit einer liefernden Zelle von Interesse durch Überwachen beobachtbarer Information, um zu bestimmen, ob sie konsistent ist mit der Information basierend auf vergangener Erfahrung, und wenn die überwachte beobachtbare Information konsistent ist mit der Information basierend auf vergangener Erfahrung, Initiieren oder Modifizieren eines Abtastens für die liefernde Zelle von Interesse;
Verwenden von Information basierend auf vergangener Erfahrung auf dem Weg zu der liefernden Zelle von Interesse durch Überwachen beobachtbarer Information, um zu bestimmen, ob sie konsistent ist mit der Information basierend auf vergangener Erfahrung auf dem Weg zu der liefernden Zelle von Interesse, und wenn die überwachte beobachtbare Information konsistent ist mit der Information auf dem Weg zu der liefernden Zelle von Interesse, Initiieren oder Modifizieren eines Abtastens für die liefernde Zelle von Interesse.

10. Das Verfahren gemäß Anspruch 5, wobei die gespeicherte Funkinformation zumindest eines aufweist aus:
Information, die bestimmt wird basierend auf Benutzerpräferenzen oder
vergangener Historie, die verwendet werden kann zum Reduzieren von Abtastzeit;
elementare Dateien (EFs - elementary files), die geschlossene Teilnehmergruppen (CSGs - closed subscriber groups) betreffen.

11. Das Verfahren gemäß Anspruch 5, wobei die gespeicherte Funkinformation zumindest eines aufweist aus:
eine weiße Liste von Zellen, bei denen eine Registrierung zuvor erfolgreich war;
eine schwarze Liste von Zellen, bei denen eine Registrierung zuvor nicht erfolgreich war;
eine weiße Liste von Netzwerken, bei denen eine Registrierung zuvor erfolgreich war;
eine schwarze Liste von Netzwerken, bei denen eine Registrierung zuvor nicht erfolgreich war;
Information, die letzte N Systeme und Frequenzen identifiziert, mit denen erfolgreich verbunden wurde;
eine Femtozelle- "Schwarze Liste";
ein Profil zum Zugriff auf zumindest eine Zugriffstechnologie;
ein Profil zum Zugriff auf zumindest eine Zugriffstechnologie, wobei die zumindest eine andere Technologie zumindest eines aus 802.11 und Bluetooth aufweist;
ein Profil zum Zugriff auf zumindest eine Zugriffstechnologie, wobei das Profil zum Zugriff auf zumindest eine Technologie Information aufweist basierend auf einer vergangenen Erfahrung, um die mobile Station (50) zu unterstützen, ein bestimmtes Netzwerk oder Zelle der zumindest einen Zugriffstechnologie schneller zu finden;
unverschlüsselte Information, die ebenfalls auf dem IM (52) gespeichert ist;
unverschlüsselte Information, die ebenfalls auf dem IM (52) gespeichert ist, wobei die unverschlüsselte Information eine Liste von verbotenen PLMNs aufweist;
Positions-basierende Information;
Positions-basierende Information, die eine Position zumindest eines aus einem WiFi-Hotspot und einer Femtozelle aufweist;
Information zum Identifizieren von Kandidatenzellen zur Übergabe von einer bestimmten Zelle.

12. Das Verfahren gemäß Anspruch 11, das weiter zumindest eines aufweist aus:
Abtasten basierend auf zumindest einer der weißen Liste von Zellen, der schwarzen Liste von Zellen, der weißen Liste von Netzwerken und der schwarzen Liste von Netzwerken;
Verwenden der Information, die die letzten N Systeme und Frequenzen identifiziert, die erfolgreich verbunden waren, durch Suchen nach diesen Frequenzen zuerst bei Anschalten der mobilen Station (50), um einen Dienst schneller zu erlangen;
- Verwenden der Femtozelle-"Schwarze Liste" durch Absehen von oder Modifizieren eines Abtastens hinsichtlich der Femtozelle auf der schwarzen Liste;
Verwenden der Positions-bezogenen Information, um den WiFi-Hotspot und/oder eine Femtozelle das nächste Mal schneller zu finden, sobald in einem Bereich in der Nähe einer Position, die durch die Positions-bezogene Information angezeigt wird.

13. Computerlesbares Medium, das ausführbare Anweisungen gespeichert hat zur Ausführung durch eine drahtlose Vorrichtung, um das Verfahren gemäß einem der Ansprüche 5 bis 12 zu implementieren.

## Revendications

1. Station mobile (50) comprenant :
au moins une antenne (60) ;
un module d'identité (IM) (52) ;
au moins une radio sans fil (56) ;
un logement (55) de mémoire amovible distincte du module d'identité et contenant des informations radio enregistrées (RMDISRI) ;
dans laquelle la station mobile (50) est configurée pour déterminer si une mémoire RMDISRI (54) est installée dans ledit logement RMDISRI (55) et, s'il est déterminé qu'une mémoire RMDISRI (54) est installée dans ledit logement RMDISRI (55), utiliser les informations radio qui sont enregistrées dans la mémoire RMDISRI (62, 70, 72) pour faire fonctionner ladite au moins une radio sans fil dans le balayage de recherche d'un réseau ou d'une cellule ;
dans laquelle, en cas d'informations radio d'un type particulier enregistrées à la fois dans la mémoire RMDISRI (54) et dans le module d'identité (52), la station mobile (50) est configurée pour utiliser les informations enregistrées dans la mémoire RMDISRI (54).

2. Station mobile (50) selon la revendication 1, comprenant en outre :
une mémoire RMDISRI (54) installée dans ledit logement RMDISRI (55).

3. Station mobile (50) selon la revendication 1, comprenant en outre une mémoire de dispositif (64), distincte du module d'identité (52) et de la mémoire RMDISRI (55) ;
dans lequel, en cas d'informations radio d'un type particulier enregistrées à la fois dans la mémoire RMDISRI (54) et dans la mémoire de dispositif (64), la station mobile (50) est configurée pour utiliser les informations enregistrées dans la mémoire RMDISRI (54).

4. Station mobile (50) selon la revendication 1, dans laquelle la station mobile (50) est configurée pour mettre à jour les informations radio en déterminant si une mémoire RMDISRI (54) est installée dans ledit logement RMDISRI (55) et, s'il est déterminé qu'une mémoire RMDISRI (54) est installée dans ledit logement RMDISRI (55), pour stocker une mise à jour des informations radio enregistrées dans la mémoire RMDISRI (54).

5. Procédé pour une station mobile (50) possédant un module d'identité (52), le procédé comprenant les étapes consistant à :
déterminer (2-1) si une mémoire RMDISRI (54) est installée dans un logement RMDISRI (55) ; et
s'il est déterminé qu'une mémoire RMDISRI (54) est installée dans ledit logement RMDISRI (55), utiliser les informations radio (2-3) qui sont enregistrées dans la mémoire RMDISRI (54) pour faire fonctionner au moins une radio d'accès sans fil dans le balayage de recherche d'un réseau ou d'une cellule ;
en cas d'informations radio d'un type particulier enregistrées à la fois dans la mémoire RMDISRI (54) et dans le module d'identité (IM) (52), utiliser les informations enregistrées dans la mémoire RMDISRI (54).

6. Procédé selon la revendication 5, comprenant en outre l'étape consistant à :
en cas d'informations radio d'un type particulier enregistrées à la fois dans la mémoire RMDISRI (54) et dans une mémoire de dispositif (64), utiliser les informations enregistrées dans la mémoire RMDISRI (54).

7. Procédé selon la revendication 5, comprenant en outre l'étape consistant à mettre à jour les informations radio en procédant comme suit :
déterminer (3-1) si une mémoire RMDISRI (54) est installée dans ledit logement RMDISRI (55) ;
après avoir déterminé qu'il y a une mémoire RMDISRI (54) installée dans ledit logement RMDISRI (55), stocker (3-2) une mise à jour des informations radio enregistrées dans la mémoire RMDISRI (54).

8. Procédé selon la revendication 5, dans lequel les informations radio enregistrées comprennent au moins un des éléments suivants :
informations identifiant une dernière technologie d'accès radio dont la station mobile (50) s'est détachée ;
tout ou partie du fichier élémentaire - paramètres du réseau (EF-NETPAR) ;
des informations identifiant les N dernières fréquences UMTS utilisées par la station mobile (50) ;
des informations fondées sur l'expérience passée, qui sont enregistrées en association avec une cellule de desserte intéressante ;
des informations fondées sur l'expérience passée, qui sont enregistrées en association avec une cellule de desserte intéressante, comprenant un motif observable des cellules détectables dans une position particulière ;
des informations fondées sur l'expérience passée, qui sont enregistrées en association avec une cellule de desserte intéressante, la cellule de desserte intéressante étant soit une femtocellule, soit un point d'accès WiFi ;
des informations fondées sur l'expérience passée, en route vers une cellule de desserte intéressante ;
des informations fondées sur l'expérience passée, en route vers une cellule de desserte intéressante, la cellule de desserte intéressante étant soit une femtocellule, soit un point d'accès WiFi.

9. Procédé selon la revendication 8, comprenant au moins l'une des étapes consistant à :
utiliser les informations identifiant une dernière technologie d'accès radio dont la station mobile (50) s'est détachée, en commençant le balayage de recherche de la dernière technologie d'accès radio d'abord à chaque fois qu'un balayage de recherche doit être exécuté ;
utiliser les informations EF-NETPAR enregistrées dans la mémoire RMDISRI (54) plutôt que les informations EF-NETPAR enregistrées dans le module d'identité (52) ;
utiliser les informations identifiant les N dernières fréquences UMTS utilisées par la station mobile (50) dans la recherche d'un système UMTS, afin d'utiliser ces informations dans le balayage de recherche ;
utiliser les informations fondées sur l'expérience passée, qui sont enregistrées en association avec une cellule de desserte intéressante, en surveillant des informations observables afin de déterminer si celles-ci sont cohérentes avec les informations fondées sur l'expérience passée et, si des informations observables surveillées sont cohérentes avec les informations fondées sur l'expérience passée, lancer ou modifier un balayage de recherche de la cellule de desserte intéressante ;
utiliser les informations fondées sur l'expérience passée, en route vers la cellule de desserte intéressante, en surveillant des informations observables afin de déterminer si celles-ci sont cohérentes avec les informations fondées sur l'expérience passée en route vers la cellule de desserte intéressante et, si des informations observables surveillées sont cohérentes avec les informations en route vers la cellule de desserte intéressante, lancer ou modifier un balayage de recherche de la cellule de desserte intéressante.

10. Procédé selon la revendication 5, dans lequel les informations radio enregistrées comprennent au moins un des éléments suivants :
des informations qui sont déterminées en fonction de préférences de l'utilisateur ou d'un historique et qui peuvent être utilisées pour contribuer à une réduction du temps de balayage :
des fichiers élémentaires (EF) intéressant des groupes d'abonnés fermés (CSG).

11. Procédé selon la revendication 5, dans lequel les informations radio enregistrées comprennent au moins un des éléments suivants :
une liste blanche des cellules auprès desquelles l'enregistrement a réussi précédemment ;
une liste noire des cellules auprès desquelles l'enregistrement a échoué précédemment ;
une liste blanche des réseaux auprès desquels l'enregistrement a réussi précédemment ;
une liste noire des réseaux auprès desquels l'enregistrement a échoué précédemment ;
des informations identifiant au moins N systèmes et fréquences ayant permis la réussite d'une connexion ;
une liste noire de femtocellules ;
un profil d'accès à au moins une technologie d'accès ;
un profil d'accès à au moins une technologie d'accès, ladite au moins une autre technologie comprenant au moins soit 802.11, soit Bluetooth ;
un profil d'accès à au moins une technologie d'accès, le profil d'accès à ladite au moins une technologie d'accès comprenant des informations fondées sur l'expérience passée, afin d'aider la station mobile (50) à trouver plus rapidement un réseau particulier ou une cellule particulière correspondant à ladite au moins une technologie d'accès ;
des informations non chiffrées qui sont également stockées dans le module d'identité (52) ;
des informations non chiffrées qui sont également stockées dans le module d'identité (52), les informations non chiffrées comprenant une liste de réseaux RMPT interdits ;
des informations fondées sur la position ;
des informations fondées sur la position, comprenant une position d'au moins un point d'accès Wifi ou une femtocellule ;
des informations identifiant des cellules candidates pour un transfert à partir d'une cellule particulière.

12. Procédé selon la revendication 11, comprenant en outre au moins une des étapes consistant à :
effectuer un balayage sur la base d'au moins une des listes suivantes : liste blanche de cellules, liste noire de cellules, liste blanche de réseaux et liste noire de réseaux ;
utiliser les informations identifiant les N derniers réseaux et fréquences ayant permis la réussite d'une connexion, en recherchant ces fréquences d'abord lorsque la station mobile (50) est mise en service, afin d'obtenir un service plus rapidement ;
utiliser la liste noire de femtocellules en évitant de rechercher les femtocellules de la liste noire ou en modifiant la recherche ;
utiliser les informations fondées sur la position pour trouver le point d'accès WiFi et/ou la femtocellule plus rapidement la fois suivante où l'on se trouve dans une zone proche de la position indiquée par les informations fondées sur la position.

13. Support lisible par ordinateur, portant stockées des instructions exécutables, destinée à être exécutées par un dispositif sans fil pour mettre en oeuvre le procédé selon l'une quelconque des revendications 5 à 12.
